Europäisches Patentamt

(19) European Patent Office

Office européen des brevets

(11) Publication number: **0 095 343**
**A1**

## (12) EUROPEAN PATENT APPLICATION

(21) Application number: **83302894.7**

(22) Date of filing: **20.05.83**

(51) Int. Cl.³: **F 16 K 5/02**

(30) Priority: **22.05.82 GB 8214985**
**07.02.83 GB 8303330**

(43) Date of publication of application:
**30.11.83 Bulletin 83/48**

(84) Designated Contracting States:
**AT BE CH DE FR IT LI LU NL SE**

(71) Applicant: **Dairy Pipe Lines Limited**
**Shire Hill**
**Saffron Walden Essex(GB)**

(72) Inventor: **Sutton, Alan**
**Great Beazleys West Road**
**Sawbridgeworth Hertfordshire(GB)**

(74) Representative: **Nash, Keith Wilfrid et al,**
**KEITH W. NASH & Co. Pearl Assurance House 90-92**
**Regent Street**
**Cambridge CB2 1DP(GB)**

(54) **Improvements in plug valves.**

(57) A plug valve comprising a casing (10) and a tapered valve plug (14) rotatably fitted therein. The plug is wholly cut away on one side of a longitudinal plane through its axis, over a central region of the length of the plug, which cut-away region (20) remains in communication with a valve port when the valve is shut, thus avoiding the trapping of working fluid. The plug is formed by a cast metal plug core (46) wrapped with a bonded lining of PTFE based material. The bonded lining extends over the external surface (48) of the plug, where it is machined to fit the casing, and over the surface portion (50) within the cut-away region (20).

Fig.2

EP 0 095 343 A1

Croydon Printing Company Ltd

Specification


Improvements in Plug Valves


This invention relates to a plug valve.

In the prior art, a conventional plug valve has a stainless steel casing with a tapered interior rotatably receiving a tapered plug or valve member. The valve may be a stop valve providing communication or cut-off between two ports in the casing, or it may be a multiway valve providing selective communication or shut-off between any two or three ports. In either case, the selective communication is achieved by means of passages through the plug which open to the exterior surface of the plug at spaced locations.

In such conventional valve, the cooperating surfaces of the casing and plug are conventionally machined to size and the plug passages are also formed by machining. O-ring seals are provided to prevent working fluid leaking out from between the casing and the plug.

Plug valves as described above are commonly used in milking parlours, in dairy processing equipment, in milk tankers and in other fluid food processing apparatus and equipment.

One disadvantage of the known plug valve is that,

in the shut-off condition, a small quantity of working fluid can be left trapped in the passage(s) through the valve plug. This trapped fluid can bacteriologically degrade before the valve is next opened, and would be liable to contaminate the working fluid, commonly a food material, which is next passed through the valve. Thus, either an initial quantity of working fluid must be passed to waste when the valve is first opened, or the valve must be properly flushed prior to each opening thereof.

Another disadvantage of the known plug, which has become apparent in the dairy industry, is that stainless steel, although for most practical purposes it may be considered as such, is not an absolutely inert, non-porous material, and impregnation thereof by food material which degrades can therefore also give rise to risk of contamination over a long period of usage.

Finally, O-ring seals are liable to deterioration and require fairly frequent replacement / and the O-ring groove can trap bacteria.

It is an object of the present invention to provide a plug valve which enables the above-described disadvantages to be overcome or at least minimised.

According to one aspect of the present invention, there is provided a plug valve comprising a casing having at least two ports and a rotatable plug providing selective communication and cut-off between said ports wherein, for providing said communication and cut-off, the plug is formed, over an intermediate region of the length of said plug parallel to its axis of rotation, with a cross-section which, at least for the major part of said region, has solid plug material only on one side of a longitudinal plane through said axis.

With this arrangement, the cut-away side of the plug at said region remains in communication with one of the ports when the valve is shut, so that none of the working fluid becomes trapped in the valve.

Preferably, the cross-section of the valve plug at the said region has a minimum area in a radial plane at the axial centre of the region, and the region is terminated in the axial direction (direction of the length of the plug) by flat surfaces in parallel radial planes, from each of which the plug cross-section smoothly reduces to said minimum area. Seen in a radial plane at said region, the cross-section of solid plug material is preferably terminated not by a single straight chord, but by two similar, smoothly curved lines which meet in an apex on the diameter bisecting the cross-section between said curved lines.

According to another aspect of the invention, there is provided a plug valve comprising a casing having at least two ports and a rotatable plug providing selective

-4-

communication and cut-off between said ports, wherein the plug, over the whole of its working surface both for cooperation with the internal wall of the casing and for permitting the passage of working fluid, is formed by a covering on a plug core of a plastics material moulded in situ on the plug core to form a homogeneous, non-porous bonded lining thereon.

Thus, in the case of the above-described valve effectively having a cut-away cross-section providing for open-sided communication between the ports, both the outer tapered surface of the plug and the whole of the cut-away region are provided with such bonded lining.

A preferred material for the bonded lining is a PTFE-based or fluorinated polymer material such as fluorinated ethylene polypropylene (FEP) or perfluoro-alkoxy (PFA), both approved for use with milk by the U.K. Dairy Association and the F.D.A.

Unlike a conventional thin PTFE coating, the bonded lining is preferably moulded with a substantial thickness of the order of 2.5 mm. Preferably such bonded lining is extended or wrapped at least partially around end shoulders or end surfaces to avoid risk of axial displacement of the lining relative to the core of the plug.

The use of a bonded lining gives rise to substantial advantages in manufacture of the plug, in that the plug core can be cast of a suitable metal or metal alloy such as stainless steel, brass or aluminium, the bonded lining formed by injection moulding around the cast core after locating the latter in a ferrule die in a plastics moulding machine, and the tapered surface of the bonded lining machined down to the correct size for the casing.

The thus produced valve plug or valve member has a surface which is even less porous and more inert than stainless steel. It can also be machined to make such an accurate mating but rotatable fit within the casing that the normally required O-ring seals can be dispensed with, except possibly when the valve is to be used at high pressures.

A practical embodiment of plug valve in accordance with the invention will now be described by way of example with reference to the accompanying drawings, in which:-

Figure 1 is a perspective view of a plug valve;

Figure 2 is an axial cross-section through an improved plug or valve member, on the line 2-2 of Figure 3; and

Figure 3 is a transverse cross-section through the valve member, on the line 3-3 of Figure 2.

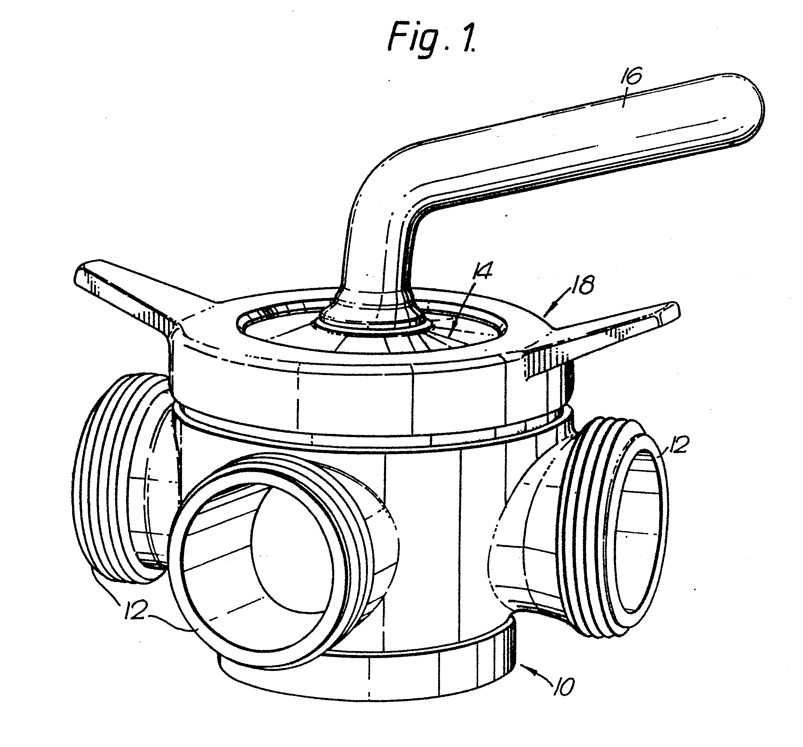

Figure 1 shows a typical plug valve. It has a stainless steel casing 10 with outlets 12 from ports on its internal wall. The illustrated valve will have three such ports, but a simple on/off plug valve will have only two ports. The interior of the casing 10 is tapered to receive as a rotatable fit therein a stainless steel tapered valve member or plug 14. The plug 14 is rotatable by a handle 16. An annular cap 18 screws on to the casing 10 to keep the plug in place.

Conventionally, the plug has one or more through passages therein to enable communication between the casing ports, these passages opening on to the exterior surface of the plug at spaced locations thereon.

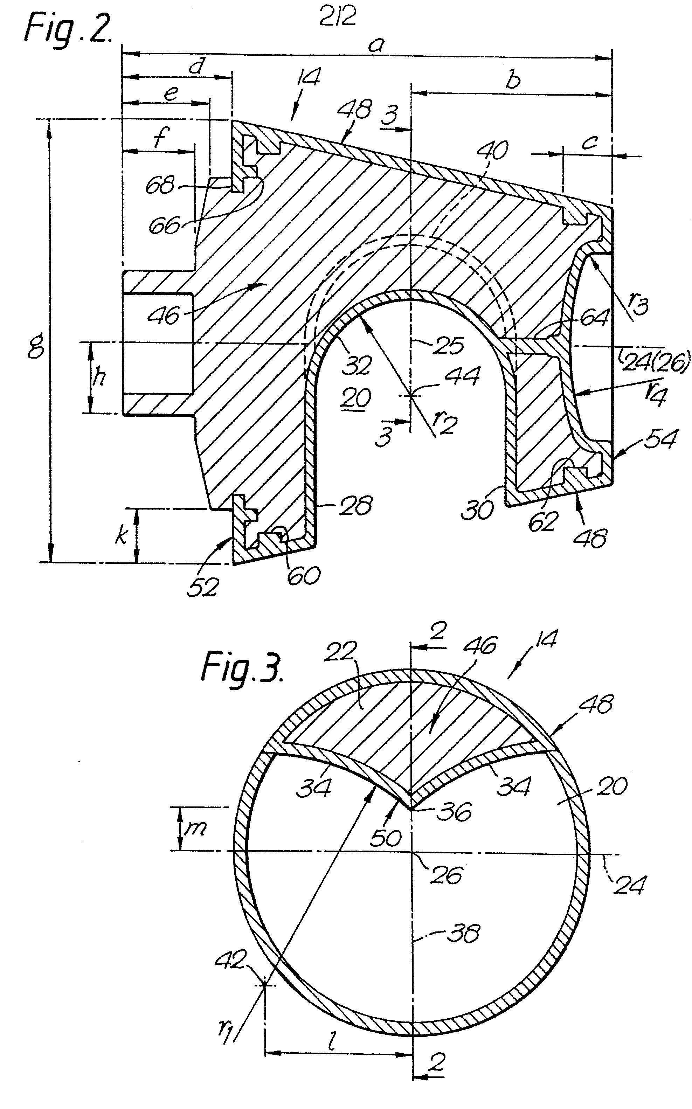

However, in accordance with the present invention, the tapered plug 14 (see Figures 2 and 3) is wholly cut-away on one side, over a central region of the length of the plug, in order to enable selective communication and cut-off.

Thus, level with said cut-away region 20, the plug has a transverse cross section, designated 22 in Figure 3, wherein the solid plug material lies wholly on one side of a longitudinal plane 24 through the axis of rotation 26 of the plug.

As shown in Figure 2, the said central region 20 of the plug 14 is defined between transverse flat surfaces 28, 30, between which the cut-away region extends inwardly, on a smooth circular curve 32, symmetrically past the said longitudinal plane 24 through the plug axis, to cross a radial plane 25 (the plane of Figure 3) where the area of solid plug is a minimum.

As will be clear from Figure 3, this area of minimum cross-section 22 is defined, in the radial plane 25, by two symmetrical circular curves 34 which meet in an apex 36 on the diameter 38 and on a chord to one side of the longitudinal plane 24. The dotted line 40 in Figure 2 indicates the circumferential extent of the cut-away region 20 on the plug surface, in the radial plane of the apex 36.

For completeness, reference 42 in Figure 3 denotes the centre of curvature of one of the two symmetrical curves 34, and reference 44 in Figure 2 denotes the centre of curvature of the curve 32.

In accordance with a further aspect of the invention, the plug 14 has a core 46 which is cast of stainless steel, undersized relative to the tapered interior of the casing. The cut-away region or cavity 20 is formed by the casting process. The cast core is located in a ferrule die in a plastics moulding machine, and a coating of a PTFE-based material is injection moulded thereon. The coating, preferably of FEP or PFA, is moulded with a thickness of the order of 2.5 mm, and provides the whole working surface of the plug including the surface portion 48 which engages with the interior of the casing and the surface portion 50 of the cut-away region 20, with coating extensions 52, 54 which respectively wrap around an annular shoulder on the core 46 at one end of the plug and around a recessed end surface at the other end of the core. The thick coating thus constitutes a bonded lining on the plug, and after removal of the plug from the moulding machine it can be machined to size for very precise mating but rotatable engagement with the casing interior. The limited material flow afforded by the plastics material of which the bonded lining is formed is sufficient to ensure a sealing action between the plug and the casing, notwithstanding small imperfections in the interior surface of the latter, which makes it possible to dispense with the O-rings employed in conventional plug valves wherein the plug finish is obtained by machining of stainless steel, which is, incidentally, a slower and more costly machining process than that of machining the plastics coating.

The processed PTFE-based material of the bonded lining is also even more inert and less porous than stainless steel, which is also advantageous for a plug valve to be employed in fluid food transfer or processing. The PTFE-based coating on the valve member makes the plug valve especially suitable for use in plant and pipelines handling corrosive fluids, such as the components of sauces, juices and other fluid foodstuffs of high acid or alkali content.

However, a prime advantage of the above-described valve is that, when the valve is shut, the cut-away region 20 remains in communication with one of the casing ports, so that none of the working fluid remains trapped in the valve member.

Further important points to note about the illustrated valve plug appear from Figure 2. First, as indicated at 60 and 62, the core 46 is cast with annular grooves in its exterior, which the PTFE based moulded coating fills to form an increased depth of coating in these grooves. These filled annular grooves afford such a greater thickness of coating so that, during subsequent machining, annular grooves can be machined into the coating for the reception of O-rings which are provided to perfect sealing with the valve casing if in use very high pressures, for example in excess of 100 p.s.i., are to be accommodated.

Second, the core is cast with an aperture through which the coating material flows to form a bridge 64 between the layer of coating material on the exterior surface of the plug and the layer of coating in the cut-away region 20. This is of practical advantage during the moulding process, as the aperture enables the moulding material to flow uniformly within the mould cavity, thus preventing the build up of differential pressures which could, for example, lead to nonuniformities in thickness and homogeneity of the final coating.

Third, in order to improve the bond between the PTFE based coating and the core at the extensions 52 around the annular shoulder at one end of the plug, the core is machined with axial and radial annular grooves which become filled with the coating material, as indicated at 66, 68, during the moulding process. The filled radial groove 68 is especially unique for this purpose.

An important point to note about the finished valve plug is that all sharp corners, edges and/or burrs are removed; typically all corner edges are finished with a-definite radius.

For completeness, in Figures 2 and 3, various approximate dimensions are marked with references a, b, c, etc., and radii $r_1$, $r_2$, etc. The relative values of these dimensions are listed below. In terms of such relative dimensions, the thickness of the bonded lining is about 2.6, and the relative dimensions of the plug core are thus readily determinable. It is to be noted that the dimension j applies to an operable head on the plug core.

| Dimension | Value | Dimension | Value |
|-----------|-------|-----------|-------|
| a | 118.4 | h | 14.0 |
| b | 49.2 | k | 13.5 |
| c | 12.6 | l | 36 |
| d | 25.6 | m | 11.3 |
| e | 18.2 | $r_1$ | 55 |
| f | 16.0 | $r_2$ | 23.8 |
| g | 105.8 | $r_3$ | 12.5 |
|   |       | $r_4$ | 67.5 |

It is to be appreciated that the above-described embodiment may be modified in various ways in accordance with the invention hereinbefore defined. In particular, it is to be noted that the bonded lining of inert, non-porous plastics material can also be applicable to plug valves providing communication between the ports in ways other than a side cut-away cavity.

0095343

## Claims

1. A plug valve comprising a casing having at least two ports and a rotatable plug providing selective communication and cut-off between said ports wherein, for providing said communication and cut-off, the plug is formed over an intermediate region of the length of said plug parallel to its axis of rotation with a cross-section which, at least for the major part of said region, has solid plug material only on one side of a longitudinal plane through said axis.

2. A plug valve according to claim 1, wherein the cross-section of the valve plug at the said region has a minimum area in a radial plane at the axial centre of the region, and the region is terminated in the axial direction (direction of the length of the plug) by flat surfaces in parallel radial planes, from each of which the plug cross-section smoothly reduces to said minimum area.

3. A plug valve comprising a casing having at least two ports and a rotatable plug providing selective communication and cut-off between said ports wherein the plug, over the whole of its working surface both for cooperation with the internal wall of the casing and for permitting the passage of working fluid, is formed by a covering on a plug core of a plastics material moulded in situ on the plug core to form a homegenous, non-porous bonded lining thereon.

4. A plug valve according to claim 3, having a plug having a cut-away cross-section providing for open-sided communication between the ports, both the outer tapered surface of the plug and the whole of the cut-away region being provided with such bonded lining.

5. A plug valve according to claim 4, wherein the plug is fomred, over an intermediate region of the length of said plug parallel to its axis of rotation, with a cross-section which, at least for the major part of said region, has solid plug material only on one side of a longitudinal plane through said axis.

6. A plug valve according to any of claims 3 to 5, wherein the bonded lining is extended or wrapped at least partially around end shoulders or end surfaces to avoid risk of axial displacement of the lining relative to the core of the plug.

7. A plug valve according to claim 6, wherein in order to increase the bond at such end shoulders or surfaces, the plug core is formed with axial and/or radial grooves into which the bonded lining is extended.

8. A plug valve according to any of claims 3 to 7, wherein the exterior of the plug core is formed with at least one annular groove filled with the bonded lining to a greater depth than the main portion of said lining.

9. A plug valve according to claim 8, further having a groove machined into the or each annular region of greater depth of bonded lining to receive a sealing ring.

10. A plug valve according to any of claims 3 to 9 in which the bonded lining is injection moulded and has an aperture formed through the plug core between the external surface thereof and the interior cut-away in the cross-section, the bonded lining extending through said aperture in the form of a bridge which, during its formation, enables the flow of coating material to avoid creation of differential pressures in the mould cavity during the moulding process.

# Fig . 1.

Fig.2.

Fig.3.

0095343

European Patent Office

**EUROPEAN SEARCH REPORT**

**0095343**

Application number

EP 83 30 2894

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-U-7 123 560  (BITTER) <br> * Claims 1, 2; figures 1, 7 * | 1-5 | F 16 K    5/02 |
| A | US-A-3 503 587  (SEDUTTO) <br> * Figure 1 * | 1,2 | |
| A | US-A-1 388 673  (TRAINER) <br> * Figure 2 * | 1,2 | |
| A | DE-A-2 363 993  (ACF) | | |

TECHNICAL FIELDS
SEARCHED (Int. Cl. ³)

F 16 K    5/00
F 16 K   27/00

The present search report has been drawn up for all claims

| Place of search <br> BERLIN | Date of completion of the search <br> 11-08-1983 | Examiner <br> SCHLABBACH M |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82